(19) Europäisches Patentamt
European Patent Office
Office européen des brevets

(11) EP 4 178 022 A1

(12) **EUROPEAN PATENT APPLICATION**

(43) Date of publication:
**10.05.2023 Bulletin 2023/19**

(21) Application number: **22198605.2**

(22) Date of filing: **29.09.2022**

(51) International Patent Classification (IPC):
**H01M 50/406** $^{(2021.01)}$    **H01M 50/446** $^{(2021.01)}$
**H01M 50/449** $^{(2021.01)}$    **H01M 50/451** $^{(2021.01)}$
**H01M 10/0525** $^{(2010.01)}$

(52) Cooperative Patent Classification (CPC):
**H01M 50/406; H01M 10/0525; H01M 50/446; H01M 50/449; H01M 50/451**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2021 KR 20210150551**

(71) Applicants:
• **SK Innovation Co., Ltd.**
**Daejeon 34124 (KR)**

• **SK ie technology Co., Ltd.**
**Jongno-gu**
**Seoul**
**03188 (KR)**

(72) Inventors:
• **JI, Sang Yoon**
**34124 Daejeon (KR)**
• **KIM, Yun Bong**
**34124 Daejeon (KR)**

(74) Representative: **Prüfer & Partner mbB**
**Patentanwälte · Rechtsanwälte**
**Sohnckestraße 12**
**81479 München (DE)**

(54) **COMPOSITE SEPARATOR, METHOD OF MANUFACTURING THE SAME, AND ELECTROCHEMICAL DEVICE INCLUDING THE SAME**

(57) The present invention relates to a composite separator, a method of manufacturing the same, and an electrochemical device including the same. More particularly, the present invention relates to a composite separator that has excellent heat resistance and an excellent adhesive force between a porous substrate and an inorganic composite layer, and prevents a significant reduction in adhesive force even when a temperature is raised, a method of manufacturing the same, and an electrochemical device including the same.

EP 4 178 022 A1

**Description**

**TECHNICAL FIELD**

The following disclosure relates to a composite separator, a method of manufacturing the same, and an electrochemical device including the same. Exemplary embodiments of the present invention may provide a composite separator that has a significantly lower thermal contraction rate and improved heat resistant and prevents a reduction in adhesive force between a porous substrate and an active layer even at a high temperature, in comparison to a separator having an inorganic particle layer formed on a porous substrate according to the related art. Exemplary embodiments of the present invention also provides a method of manufacturing a composite separator of the invention, and an electrochemical device including the same.

**BACKGROUND**

Recently, in accordance with a high capacity and a large size of a secondary battery for application in an electric vehicle or the like, it is significantly important to secure safety of the battery.
The safety of the battery may be realized, for example, by preventing ignition of the battery caused by a forced internal short circuit due to an external impact. The safety of the battery is secured by forming, on an entire area of a porous substrate formed of a polyolefin or the like, an inorganic particle layer in which inorganic particles are connected and fixed to each other by an organic binder and the organic binder allows the inorganic particle layer to adhere to the porous substrate.
A common organic binder has been used for adhesion of the inorganic particle layer to the porous substrate and for connecting and fixing the inorganic particles in the inorganic particle layer when the inorganic particle layer is introduced to the porous substrate formed of a polyolefin or the like.
However, in a case where the organic binder is excessively used, a chemical reaction may occur between an electrolyte of a battery and components of a polymer-based organic binder, which causes deterioration of the components, or an adhesive force between the porous substrate and the inorganic particle layer may be significantly reduced due to softening of the polymer material at a high temperature.
In addition, the organic binder is dissolved in the electrolyte and eluted, resulting in deterioration of the performance of the electrolyte or deterioration of the performance of the battery such as clogging of a pore layer or an increase in volume of the battery caused by swelling of the organic binder due to the electrolyte.
As a result of conducting intensive studies to solve the above problems, the present inventors found that the problems are solved by providing a composite separator including a porous substrate and an inorganic composite layer that is formed on the porous substrate and is formed using a slurry composition containing inorganic particles, a one-dimensional inorganic material, and a defoamer.
That is, the present inventors have found that the above problems may be solved because the composite separator may have significantly improved thermal stability, may implement an excellent adhesive force between the porous substrate and the inorganic particle layer even when an organic binder is not contained or is contained in an extremely small amount, and may prevent a significant reduction in adhesive force even when a temperature is raised. Also, it has been found that the resistance increase rate can be significantly reduced.

**SUMMARY**

An aspect of the present invention is directed to providing a composite separator that has an excellent adhesive force between a porous substrate and an inorganic composite layer even when an organic binder is not contained or a content of the organic binder is significantly low. A a significant reduction in adhesive force is prevented even when a temperature is raised, because the composite separator includes the inorganic composite layer that is formed on the porous substrate and is formed using a slurry composition containing inorganic particles, a one-dimensional inorganic material, and a defoamer. In another aspect, the present invention provides a method of manufacturing the composite separator. In another aspect, the present invention provides an electrochemical device including the same.
The composite separator of the present invention is capable of preventing ignition or rupture of a battery caused by an abnormal phenomenon such as a rapid rise in temperature due to its improved heat resistance.
In one embodiment of the present invention, provided herein is a composite separator that does not use an organic binder or may use an extremely small amount of an organic binder since a one-dimensional inorganic material is used, is chemically stable, and has excellent electrical properties. The present invention also provides a method of manufacturing the same, and an electrochemical device including the same.
In one general embodiment, a composite separator includes: (a) a porous substrate; and (b) an inorganic composite layer that is formed on one or both surfaces of the porous substrate and is formed using a slurry composition containing inorganic particles, a one-dimensional inorganic material, and a defoamer.

The inorganic composite layer may have pores formed by connecting and fixing inorganic particles and one-dimensional inorganic material to each other.

The slurry composition may not contain any organic binder, or may further contain an organic binder in an amount of 1 to 50 parts by weight with respect to 100 parts by weight of the one-dimensional inorganic material.

The one-dimensional inorganic material may be an inorganic nanowire, an inorganic nanofiber, or a combination thereof.

The one-dimensional inorganic material may have a diameter of 1 to 100 nm, preferably 2 to 10 nm; and/or (b) an average length of 0.01 to 100 $\mu$m, preferably 0.1 to 10 $\mu$m; and/or (c) a L/D ratio of at least 100, preferably 100 to 20,000, more preferably 150 to 10,000, more preferably 200 to 5,000, and most preferably 250 to 2,500.

The one-dimensional inorganic material may be formed of or may comprise one or a mixture of two or more selected from a metal, carbon, a metal oxide, a metal nitride, a metal carbide, a metal carbonate, a metal hydrate, and a metal carbonitride, preferably the one-dimensional inorganic material is formed of an aluminium oxide hydroxide.

The one-dimensional inorganic material may be formed of or may comprise one or a mixture of two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$.

The inorganic particles may be formed of or may comprise one or a mixture of two or more selected from a metal oxide, a metal nitride, a metal carbide, a metal carbonate, a metal hydrate, and a metal carbonitride, preferably the inorganic particles comprise aluminium oxide hydroxide.

The inorganic particles may be formed of or may comprise one or a mixture of two or more selected from boehmite, $Al_2O_3$, $TiO_2$, $CeO_2$, MgO, NiO, $Y_2O_3$, CaO, $SrTiO_3$, $SnO_2$, ZnO, and $ZrO_2$.

A size of the inorganic particle may be 0.001 to 20 $\mu$m, preferably 0.001 to 10 $\mu$m, more preferably 0.01 to 5 $\mu$m, and most preferably 0.1 to 2 $\mu$m. The size may be an average size.

The slurry composition may further contain organic particles, preferably in an amount of 0.1 to 40 parts by weight with respect to 100 parts by weight of the inorganic particles.

The defoamer may contain polyoxyalkylene or a unit derived from a polyoxyalkylene compound.

A content of the defoamer may be 100 to 500 ppm, preferably 100 to 300 ppm with respect to a total content of the slurry composition.

The porous substrate may be formed of or comprises or is formed of polyethylene, polypropylene, or copolymers thereof, preferably one or more selected from high-density polyethylene, low-density polyethylene, linear low-density polyethylene, ultra-high molecular weight polyethylene, polypropylene, and copolymers thereof.

A thickness of the composite separator may be 5 to 100 $\mu$m.

The composite separator may have a pore size of 0.001 to 10 $\mu$m and a porosity of 5 to 95%. The pore size may be an average pore size.

An adhesive force at 25°C ($A_{25}$) and an adhesive force at 90°C ($A_{90}$) between the porous substrate and the inorganic composite layer of the composite separator may satisfy the following Expression 1: $A_{90}/A_{25} \geq 0.95$ [Expression 1] wherein the adhesive force is obtained by measuring a peel strength between the porous substrate and the inorganic composite layer using a universal testing machine (UTM) (3343, manufactured by Instron Corporation) according to ASTM D903, and a unit thereof is gf/15 mm.

In another general embodiment, provided herein is an electrochemical device including a cathode, an anode, a separator, and an electrolyte, wherein the separator is the composite separator described herein.

The electrochemical device may be a lithium secondary battery.

In still another general embodiment, provided herein is a method of manufacturing a composite separator, wherein the method includes: coating a slurry composition containing inorganic particles, a one-dimensional inorganic material, and a defoamer onto one or both surfaces of a porous substrate; and drying the coated porous substrate to form an inorganic composite layer.

Other features and aspects will be apparent from the following detailed description, and the claims.

**DETAILED DESCRIPTION OF EMBODIMENTS**

Hereinafter, a composite separator according to the present invention, a method of manufacturing the same, and an electrochemical device including the same will be described in detail.

Here, unless otherwise defined, all the technical terms and scientific terms have the same meanings as commonly understood by those skilled in the art to which the present invention pertains. The terms used in the description of the present invention are merely used to effectively describe a specific exemplary embodiment, but are not intended to limit the present invention.

Here, unless otherwise defined, experimental values such as thickness, size, diameter, surface area, etc. may mean an average value (median value).

In particular, the terms "inorganic" and "organic" are to be understood as mutually exclusive. As used herein, the term "inorganic" preferably refers to (a) any element (including elemental carbon), and (b) any compound that does not contain carbon with the exception of carbon monoxide, carbon dioxide, carbon disulfide, carbides, salts of carbonic acid, salts of hydrogen cyanide, salts of cyanic acid and salts of thiocyanic acid. All other compounds are to be understood as "organic".In addition, unless otherwise stated in the specification, a unit of an additive may be part(s) by weight.

In addition, unless the context clearly indicates otherwise, the singular forms used in the specification and the scope of the appended claims are intended to also include the plural forms.

Throughout the specification describing the present invention, unless explicitly described to the contrary, "comprising" any components may be understood to imply further inclusion of other components rather than the exclusion of any other components.

Hereinafter, unless otherwise specifically defined in the present specification, a "combination thereof" refers to mixing or copolymerization of constituents.

Hereinafter, unless otherwise specifically defined in the present specification, "A and/or B" may refer to an aspect including both A and B, and may refer to an aspect selected from A and B.

Hereinafter, unless otherwise specifically defined in the present specification, "derived from" means that at least one of functional groups of a compound is modified, and specifically, may include a form in which a reactive group and/or a leaving group of the compound is modified or left according to a reaction. In addition, if structures derived from compounds different from each other are identical to each other, a structure derived from one compound may include the same structure derived from another component.

In one embodiment, the present invention may provide a composite separator that does not cause problems in that heat resistance is reduced, an adhesive force between a porous substrate and a coating layer is low, and the adhesive force is significantly reduced when a temperature is raised, even when the coating layer(inorganic composite layer) formed on the porous substrate does not contain an organic binder or contains an extremely small amount of an organic binder.

The present invention will be described in detail as follows.

In one embodiment, the present invention may provide a composite separator including: (a) a porous substrate; and (b) an inorganic composite layer that is formed on one or both surfaces of the porous substrate and is formed using a slurry composition containing inorganic particles, a one-dimensional inorganic material, and a defoamer.

Further, in another embodiment of the present invention may provide a composite separator including: (a) a porous substrate; and (b) an inorganic composite layer that is formed on one or both surfaces of the porous substrate and is formed using a slurry composition containing inorganic particles, a one-dimensional inorganic material, a defoamer, and an organic binder.

In the inorganic composite layer, the inorganic particles may be connected and fixed by the one-dimensional inorganic material, and pores may be formed between the inorganic particles.

In a case of a composite separator according to the related art, when a coating layer containing inorganic particles was formed on a porous substrate, if an excessive amount of an organic binder was not used, the inorganic particles were not dispersed well, such that a coating layer having sufficient pores could not be produced, and a sufficient adhesive force between the coating layer and the porous substrate could not be secured even when the inorganic particles in the coating layer were dispersed by applying excessive energy.

On the other hand, in the case of the composite separator according to an exemplary embodiment of the present invention, even when an organic binder is not contained or is contained in an extremely small amount, the inorganic composite layer as a coating layer formed on the porous substrate may secure sufficient pores. In particular, without wishing to be bound by theory, the inorganic composite layer may be adhered to the porous substrate by the one-dimensional inorganic material or by anchoring, and the adhesive force between the porous substrate and the inorganic composite layer may be significantly excellent.

In addition, in the composite separator according to an exemplary embodiment of the present invention, a content of an organic binder that is easily softened at a high temperature may be minimized since a one-dimensional inorganic material that is not softened at a high temperature is used in the formation of the inorganic composite layer. At the same time, generation of bubbles during preparation of the slurry composition containing the inorganic particles, the one-dimensional inorganic material and a defoamer may be suppressed and a density and coating uniformity of the formed inorganic composite layer may be significantly improved since the slurry composition contains the defoamer. As a consequence, the adhesive force between the porous substrate and the inorganic composite layer may be prevented from being significantly reduced even when a temperature is raised, and ignition or rupture of a battery caused by an abnormal phenomenon such as a rapid rise in temperature may be prevented due to excellent heat resistance. Therefore, the composite separator may maintain more excellent durability even at a high temperature.

Accordingly, an electrochemical device including the composite separator according to an exemplary embodiment of the present invention may be not easily damaged due to a high temperature, overcharging, an external impact, and the like in comparison to an electrochemical device including a composite separator in which an excessive amount of an organic binder is contained, and may implement significantly improved safety of a battery.

In an exemplary embodiment of the present invention, the inorganic composite layer may be formed on an area corresponding to 90% or more and specifically 95% or more of a total area of each of one or both surfaces of the porous substrate. More specifically, the inorganic composite layer may be formed on an area corresponding to 100% of the total area of each surface of the porous substrate except in the case where fine defects occur.

The porous substrate useful for the purpose of the present invention may have two surfaces and, as such may be considered generally planar. In one embodiment, the porous substrate is a film, preferably a polymer film. In an exemplary embodiment of the present invention, the porous substrate may be formed of polyethylene, polypropylene and copolymers thereof, preferably one or more selected from high-density polyethylene, low-density polyethylene, linear low-density polyethylene, ultra-high molecular weight polyethylene, polypropylene, and copolymers thereof, but it not limited thereto. In one embodiment, the porous substrate is formed of polyethylene.

In an exemplary embodiment of the present invention, (a) a thickness of the porous substrate may be 1 to 100 $\mu$m, specifically, 5 to 60 $\mu$m, and more specifically, 5 to 30 $\mu$m; and/or (b) a pore size (diameter) of the porous substrate may be 0.01 to 20 $\mu$m, and specifically, 0.05 to 5 $\mu$m; and/or (c) a porosity of the porous substrate may be 5 to 95%, and specifically, 30 to 60%, but the present invention is not limited thereto. In one embodiment the porosity is 41%. The pore size of the substrate can be measured by a known method, for example, it can be measured using a porosimeter equipment. And the porosity of the substrate may be a value calculated by a known conventional method, for example, may be a value obtained by dividing an apparent density value by a true density value and then multiplying by 100. In an embodiment, the pore size and porosity value may be values measured using only the porous substrate.

In an exemplary embodiment of the present invention, a thickness of the composite separator may be 5 to 100 $\mu$m, and specifically, 10 to 50 $\mu$m, but is not limited thereto. Additionally or alternatively, (a) a pore size of the composite separator may be 0.001 to 10 $\mu$m; and/or (b) a porosity of the composite separator may be 5 to 95%, but the present invention is not limited thereto.

In an exemplary embodiment of the present invention, an adhesive force at 25°C ($A_{25}$) and an adhesive force at 90°C ($A_{90}$) between the porous substrate and the inorganic composite layer of the composite separator may satisfy, but are not limited to, the following Expression 1:$A_{90}/A_{25} \geq 0.95$ [Expression 1]
wherein the adhesive force is obtained by measuring a peel strength between the porous substrate and the inorganic composite layer using a universal testing machine (UTM) (3343, manufactured by Instron Corporation) according to ASTM D903, and a unit thereof is gf/15 mm.

More specifically, $A_{90}/A_{25}$ in the composite separator may be 0.98 or more, 0.99 or more, 1.00 or more, 0.98 to 1.03, 0.99 to 1.02, 0.98 to 1.02, or 1.00 to 1.01. but is not limited thereto. In one specific embodiment, $A_{90}/A_{25}$ in the composite separator may be 1.00 or more.

In a case where the value of Expression 1 measured by the above method as a measure for determining a degree of reduction in adhesive force at a high temperature is in the above range, the composite separator according to an exemplary embodiment of the present invention may have a more increased adhesive force between the porous substrate and the inorganic composite layer at a high temperature and may be stable, and the inorganic composite layer is not easily peeled off from the porous substrate, which may implement maintenance of more excellent durability. Therefore, the battery stability at a high temperature of the electrochemical device including the composite separator may also be significantly improved.

Hereinafter, the respective components contained in the slurry composition forming the inorganic composite layer according to an exemplary embodiment of the present invention will be described in detail. However, this is only illustrative, and the present invention is not limited to specific exemplary embodiments which are illustratively described by the present invention.

<One-dimensional inorganic material>

The slurry composition that is used to form the inorganic composite layer of the composite separator contains a one-dimensional inorganic material. As used herein, the term "one-dimensional" preferably refers to an object having a generally linear structure, more preferably a linear structure. Examples of linear structures include needles, fibers, wires and the like.

One-dimensional objects, such as the one-dimensional inorganic material, can be characterized by a specific length/diameter ratio (L/D ratio). In one embodiment of the present invention, the one-dimensional inorganic material has a L/D ratio of 100 to 20,000, preferably 150 to 10,000, more preferably 200 to 5,000, and most preferably 250 to 2,500.

In an exemplary embodiment of the present invention, the one-dimensional inorganic material may be a one-dimensional form. The one-dimensional inorganic material may be an inorganic material having a structure including a relatively shorter width/diameter and a relatively longer length/longitudinal extension. The size of the one-dimensional inorganic material, at least with respect to the width/diameter, is typically in a nanoscale order. Examples of the one-dimensional inorganic material may include an inorganic nanowire, an inorganic nanofiber, or a combination thereof, without being limited therto. In one embodiment, the one-dimensional inorganic material is an inorganic nanowire.

In an exemplary embodiment of the present invention, the one-dimensional inorganic material may be crystalline.

In a case where the one-dimensional inorganic material has a structure in which a nanowire or nanofiber has a high surface area and a high length/diameter ratio (L/D), chemical bonding such as van der Waals bonding may be more smoothly performed by high surface contact between the one-dimensional inorganic material and the inorganic particles, the inorganic particles may be more smoothly tangled by the one-dimensional inorganic material, and pores may be more smoothly formed because the inorganic particles are more strongly fixed in contact with each other.

In an exemplary embodiment of the present invention, a specific surface area of the one-dimensional inorganic material may be 50 to 4,000 $m^2/g$, specifically, 300 to 4,000 $m^2/g$, and more specifically, 1,000 to 4,000 $m^2/g$, but is not limited thereto. The specific surface area may be measured using a BET measuring device. Additionally or alternatively, in an exemplary embodiment of the present invention, the one-dimensional inorganic material may have (a) an average diameter of 1 to 100 nm, preferably 2 to 10 nm; and/or (b) an average length of 0.01 to 100 $\mu$m, preferably 0.1 to 10 $\mu$m; and/or (c) a length/diameter ratio (L/D) of at least 100, preferably 100 to 20,000, more preferably 150 to 10,000, more preferably 200 to 5,000, and most preferably 250 to 2,500, but is not limited thereto. The diameter and lenght may be an average value of values observed using SEM(Scanning eletron microscope) or TEM(Transmission electron microscope).

In an exemplary embodiment of the present invention, when the physical properties of the one-dimensional inorganic material are in the above ranges, the chemical bonding such as van der Waals bonding by the one-dimensional inorganic material, and physical bonding such as entanglement between the one-dimensional inorganic materials, entanglement between the one-dimensional inorganic material and the porous substrate, or entanglement between the one-dimensional inorganic material and the inorganic particles may be more smoothly performed, and the adhesive force between the porous substrate and the inorganic composite layer may be further increased.

In an exemplary embodiment of the present invention, the one-dimensional inorganic material may be formed of, or may comprises, one or a mixture of two or more selected from a metal, carbon, a metal oxide, a metal nitride, a metal carbide, a metal carbonate, a metal hydrate, and a metal carbonitride, preferably the one-demensional inorganic meterial may be formed of aluminium oxide hydroxide, and more specifically, may be formed of, or may comprises, one or a mixture of two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$, but is not limited thereto. More preferably, the one-dimensional inorganic material may be formed of bohemite.

<Inorganic particles>

The slurry composition that is used to form the inorganic composite layer of the composite separator further contains inorganic particles. As used herein, the term "particle" preferably refers to a two-dimensional or three-dimensional structure. Exemplary two-dimensional structures include platelets, chips, flakes and the like. Exemplary three-dimensional structures include polyhedrons and spheres, but also irregularly shaped nuggets.

In an exemplary embodiment of the present invention, the inorganic particles may be formed of, or may comprises, one or a mixture of two or more selected from a metal oxide, a metal nitride, a metal carbide, a metal carbonate, a metal hydrate, and a metal carbonitride, preferably the inorganic particles may be formed of aluminium oxide hydroxide, and specifically, may be formed of, or may comprises, one or a mixture of two or more selected from boehmite, $Al_2O_3$, $TiO_2$, $CeO_2$, MgO, NiO, $Y_2O_3$, CaO, $SrTiO_3$, $SnO_2$, ZnO, and $ZrO_2$, but is not limited thereto. More preferably, the inorganic particles may be formed of bohemite.

Accordingly, in a particularly preferred embodiment, both the one-dimensional inorganic material and the inorganic particles may be formed of aluminium oxide hydroxide, preferably boehmite.

In an exemplary embodiment of the present invention, an average size or average particle diameter of the inorganic particle may be 0.001 to 20 $\mu$m, and specifically, 0.001 to 10 $\mu$m, but is not limited thereto. Preferably a size of the inorganic particle may be 0.001 to 10 $\mu$m, more preferably 0.01 to 5 $\mu$m, and most preferably 0.1 to 2 $\mu$m. The size of the inorganic particles may be measured using a particle size measuring device, and may be a D50 value.

In an exemplary embodiment of the present invention, a shape of the inorganic particle may be a spherical shape, a square shape, an oval shape, a random shape, or a combination thereof, but is not limited thereto.

In an exemplary embodiment of the present invention, a content of the inorganic particles with respect to the total weight of the inorganic composite layer may be 50 to 99.5 wt%, specifically, 60 to 99 wt%, and more specifically, 80 to 99 wt%, but is not limited thereto. When the content of the inorganic particles is in the above range, the adhesive force between the inorganic composite layer and the porous substrate may be further increased, and the effect of fixing the inorganic particles may be more sufficiently exhibited, such that separation of the inorganic particles may be further prevented.

In an exemplary embodiment of the present invention, the inorganic composite layer may be an inorganic composite layer in which pores are formed by further containing organic particles in addition to inorganic particles. In this case, the organic particle may be a polyethylene particle or the like, but the type of the organic particle is not particularly limited as long as electrochemical stability is secured. As noted above, the term "particle" preferably refers to a two-dimensional or three-dimensional structure.

In addition, in a case where the inorganic composite layer contains organic particles, a content of the organic particles may be 0.1 to 40 parts by weight with respect to 100 parts by weight of the inorganic particles, but is not limited thereto. A size and a shape of the organic particle may be selected from the same ranges of the size and the shape of the inorganic particle.

<Defoamer>

In an exemplary embodiment of the present invention, the defoamer may contain a polyoxyalkylene compound or a unit derived from a polyoxyalkylene compound.

The type of the polyoxyalkylene compound is not particularly limited as long as it is a compound having a polyoxyalkylene chain, and an oxyalkylene group constituting the polyoxyalkylene chain may include an oxyalkylene group having 2 to 4 carbon atoms, that is, oxyethylene, oxypropylene, oxybutylene, or the like.

The polyoxyalkylene chain may be composed of one type of oxyalkylene group or a combination of two or more types of oxyalkylene groups, and in a case where the polyoxyalkylene chain is composed of two or more types of oxyalkylene groups, the binding method thereof may be selected from block, random, or a combination thereof, but is not limited thereto.

In a case where the slurry composition contains a defoamer having the properties described above, when the slurry composition is prepared, generation of bubbles may be further suppressed, such that a density and coating uniformity of the inorganic composite layer to be formed may be further improved, and the adhesive force between the porous substrate and the inorganic composite layer may be further increased.

In an exemplary embodiment of the present invention, a content of the defoamer may be contained in an amount of 100 to 500 ppm, and specifically, 100 to 300 ppm, with respect to the total content of the slurry composition, but is not limited thereto. In addition, in an exemplary embodiment of the present invention, a content of the defoamer may be contained in an amount of about 0.01 wt% to 0.1 wt% by weight based on the weight of the inorganic composite layer, but is not limited thereto.

In one exemplary embodiment, as a commercially available antifoam agent, BYK-012, BYK-011, BYK-031, BYK-065, BYK-077, BYK-094 or BYK-051 etc. can be used. In one embodiment, the content of the defoamer is 200 ppm.

<Organic binder>

In an exemplary embodiment of the present invention, in a case where the slurry composition contains an organic binder, the organic binder may be contained in an amount of 1 to 50 parts by weight, and specifically, 1 to 30 parts by weight, with respect to 100 parts by weight of the one-dimensional inorganic material, but is not limited thereto. When the content of the organic binder is in the above range, the heat resistance and the adhesive force of the composite separator may be further improved, and the reduction in adhesive force at a high temperature may be further prevented, and electrical and chemical stability of an electrochemical device including the composite separator may be further significantly implemented. It may be preferred that the slurry composition contains as little organic binders as possible. Specifically, the slurry composition may contain not more than 50 parts by weight of organic binders with respect to 100 parts by weight of the one-dimensional inorganic material, preferably not more than 40 parts, more preferably not more than 20 parts, still more preferably not more than 10 parts, and most preferably the slurry composition does not contain organic binders. In the latter case, also the inorganic composite layer is free of organic binder.

In an exemplary embodiment of the present invention, the organic binder may be one selected from a water-soluble polymer and a water-insoluble polymer, and the organic binder may be, for example, one or a mixture of two or more selected from an acrylic polymer, a styrene-based polymer, a vinyl alcohol-based polymer, a polyethylene oxide, a vinylpyrrolidone-based polymer, a cellulose-based polymer, and a fluorine-based polymer, but is not limited thereto.

Specifically, the acrylic polymer may be polyacrylamide, polymethacrylate, polyethylacrylate, polyacrylate, polybutylacrylate, sodium polyacrylate, an acrylic acid-methacrylic acid copolymer,but is not limited thereto. The styrene-based polymer may be polystyrene, polyalphamethylstyrene, polybromostyrene, but is not limited thereto. The vinyl alcohol-based polymer may be polyvinyl alcohol, polyvinyl acetate, a polyvinyl acetate-polyvinyl alcohol copolymer, but is not limited thereto. The vinyl pyrrolidone-based polymer may be a copolymer including polyvinylpyrrolidone and vinylpyrrolidone, but is not limited thereto. The cellulose-based polymer may be carboxymethyl cellulose, cellulose acetate propionate, cellulose acetate, cellulose acetate butyrate, but is not limited thereto. In one embodiment, the organic binder is polyvinyl alcohol. However, the present invention is not limited thereto.

Hereinafter, a method of manufacturing a composite separator according to an exemplary embodiment of the present invention will be described.

In the composite separator according to an exemplary embodiment of the present invention, the inorganic particles may be dispersed well, and the problems caused by excessive use of an organic binder in the related art may be solved even when a slurry composition is prepared in which inorganic particles, a one-dimensional inorganic material, and a defoamer are mixed or a slurry composition is prepared in which inorganic particles, a one-dimensional inorganic material, a defoamer, and an organic binder are mixed , and the slurry composition does not contain an organic binder or contains a small amount of an organic binder.

Therefore, in a case where the slurry composition is coated onto one or both surfaces of a porous substrate to form an inorganic composite layer, an adhesive force between the porous substrate and the inorganic composite layer may be increased, the adhesive force is not significantly reduced even at a high temperature, and heat resistance is excellent. As a result, ignition or rupture of a battery caused by an abnormal phenomenon such as a rapid rise in temperature may be prevented.

In one embodiment, the slurry composition has a solid concentration of from 5 to 75 wt% based on the total weight of the slurry, preferably 10 to 60 wt%, and most preferably 15 to 50 wt%.

The inorganic particles and one-dimensional inorganic material may be present in a specific weight ratio in the slurry composition and, hence, also in the inorganic composite layer. In one embodiment of the present invention, the slurry composition contains 0.1 to 50 parts by weight, preferably 0.5 to 25 parts by weight, more preferably 1 to 15 parts by weight, and most preferably 2 to 10 parts by weight of the one-dimensional inorganic material with respect to 100 parts by weight of the inorganic particles.

Specifically, according to an exemplary embodiment of the present invention, a method of manufacturing a composite separator may include: coating a slurry composition containing inorganic particles, a one-dimensional inorganic material, and a defoamer onto one or both surfaces of a porous substrate; and drying the coated porous substrate to form an inorganic composite layer.

As a dispersion medium (solvent) of the slurry composition forming the inorganic composite layer, water may be mainly used. Other dispersion media (solvents), lower alcohols such as ethanol, methanol, and propanol, solvents such as dimethylformamide (DMF), acetone, tetrahydrofuran, diethyl ether, methylene chloride, N-methyl-2-pyrrolidone, hexane, and cyclohexane, and mixtures thereof may also be used, but the present invention is not limited thereto.

An aggregate of the inorganic particles in the slurry composition prepared by mixing inorganic particles, a one-dimensional inorganic material, and a defoamer with the dispersion medium (solvent) may be crushed using a ball mill, a beads mill, a planetary mixer (a grinding and mixing method through rotation and revolution), but is not limited thereto. In this case, a crushing time may be 0.01 to 20 hours, and an average particle size of the crushed inorganic particle may be 0.001 to 10 $\mu$m, but the present invention is not limited thereto.

By coating the slurry composition onto the porous substrate and drying the porous substrate, a composite separator in which an inorganic composite layer is formed on one or both surfaces of the porous substrate may be obtained.

Examples of the coating method include a knife coating method, a roll coating method, a die coating method, and a dip coating method, but are not limited thereto.

Since the descriptions of the inorganic particle, the one-dimensional inorganic material, the defoamer, and the organic binder are the same as those described in the composite separator, specific descriptions thereof will be omitted here, referring to the corresponding above description of the composite separator.

The composite separator described above as such, and the composite separator as manufactured by the above manufacturing method may be used as a separator of an electrochemical device, for example, a separator of a lithium secondary battery. Examples of the electrochemical device include a primary battery, a secondary battery, a fuel cell, and a capacitor, but are not limited thereto.

In a case where the composite separator according to an exemplary embodiment of the present invention is generally used in a battery, a general method of disposing and assembling an anode, a separator, and a cathode, and injecting an electrolyte is applied. Therefore, the manufacturing method will not be described in detail here.

Examples of a cathode active material of a battery of the present invention include lithiated magnesium oxide, lithiated cobalt oxide, lithiated nickel oxide, and a composite oxide obtained by a combination thereof, and the cathode active material is not particularly limited as long as it is a general material used for a cathode active material of a secondary battery.

An anode active material of a battery of the present invention is not particularly limited as long as it is a general anode active material used for an anode of a secondary battery, and examples thereof include carbon-based materials such as a lithium metal, activated carbon, and graphite.

The cathode active material and the anode active material are bound to a cathode current collector and an anode current collector, respectively. An aluminum foil, a nickel foil, or the like may be used as the cathode current collector. In one embodiment, the cathode current collector is made from aluminium. The anode current collector is selected from copper, nickel, and the like, but is not limited thereto as long as it is generally used. In one embodiment, the anode current collector is made from copper. Therefore, the present invention is not limited thereto.

The electrolyte to be used in the present invention is also not limited as long as it is used in this field. Therefore, the electrolyte will not be further described in the present invention.

Still another aspect of the present invention relates to a composite separator comprising:

(a) a porous substrate; and
(b) an inorganic composite layer on one or both surfaces of the porous substrate formed by coating a slurry composition containing inorganic particles, a one-dimensional inorganic material, and a defoamer onto the porous substrate and drying the coated porous substrate. The embodiments disclosed hereinabove accordingly apply to this aspect of the invention.

The invention relates also to the following numbered aspects:

Aspect 1 A composite separator comprising:

(a) a porous substrate; and
(b) an inorganic composite layer on one or both surfaces of the porous substrate, wherein the inorganic composite layer comprises inorganic particles and a one-dimensional inorganic material.

Aspect 2 The composite separator of aspect 1, wherein the inorganic composite layer contains not more than 50 parts by weight of organic binders with respect to 100 parts by weight of the one-dimensional inorganic material, preferably not more than 40 parts, more preferably not more than 20 parts, still more preferably not more than 10 parts, and most preferably the inorganic composite layer does not contain organic binders.

Aspect 3 The composite separator of any of aspects 1 or 2, wherein the one-dimensional inorganic material is an inorganic nanowire, an inorganic nanofiber, or a combination thereof.

Aspect 4 The composite separator of any of aspects 1 to 3, wherein the one-dimensional inorganic material has (a) a diameter of 1 to 100 nm, preferably 2 to 10 nm; and/or (b) a length of 0.01 to 100 $\mu$m, preferably 0.1 to 10 $\mu$m; and/or (c) a L/D ratio of 100 to 20,000, preferably 150 to 10,000, more preferably 200 to 5,000, and most preferably 250 to 2,500.

Aspect 5 The composite separator of any of aspects 1 to 4, wherein the one-dimensional inorganic material is formed of one or a mixture of two or more selected from a metal, carbon, a metal oxide, a metal nitride, a metal carbide, a metal carbonate, a metal hydrate, and a metal carbonitride, preferably one or a mixture of two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$, and more preferably the one-dimensional inorganic material is formed of boehmite.

Aspect 6 The composite separator of any of aspects 1 to 5, wherein the inorganic particles comprise one or a mixture of two or more selected from a metal oxide, a metal nitride, a metal carbide, a metal carbonate, a metal hydrate, and a metal carbonitride, preferably one or a mixture of two or more selected from boehmite, $Al_2O_3$, $TiO_2$, $CeO_2$, MgO, NiO, $Y_2O_3$, CaO, $SrTiO_3$, $SnO_2$, ZnO, and $ZrO_2$, and more preferably the inorganic particles comprise boehmite.

Aspect 7 The composite separator of any of aspects 1 to 6, wherein a size of the inorganic particle is 0.001 to 20 $\mu$m, preferably 0.001 to 10 $\mu$m, more preferably 0.01 to 5 $\mu$m, and most preferably 0.1 to 2 $\mu$m.

Aspect 8 The composite separator of any of aspects 1 to 7, wherein the porous substrate is a polymer film, preferably a film formed of polyethylene, polypropylene or copolymers thereof, more preferably high-density polyethylene, low-density polyethylene, linear low-density polyethylene, ultra-high molecular weight polyethylene, polypropylene, or copolymers thereof.

Aspect 9 The composite separator of any of aspects 1 to 8, wherein (a) a thickness of the composite separator is 5 to 100 $\mu$m; and/or (b) the composite separator has a pore size of 0.001 to 10 $\mu$m; and/or (c) the composite separator has a porosity of 5 to 95%.

Aspect 10 The composite separator of any of aspects 1 to 10, wherein the inorganic composite layer contains 0.1 to 50 parts by weight, preferably 0.5 to 25 parts by weight, more preferably 1 to 15 parts by weight, and most preferably 2 to 10 parts by weight of the one-dimensional inorganic material with respect to 100 parts by weight of the inorganic particles.

Aspect 11 The composite separator of any of aspects 1 to 10, wherein an adhesive force at 25°C ($A_{25}$) and an adhesive force at 90°C ($A_{90}$) between the porous substrate and the inorganic composite layer of the composite separator satisfy the following Expression 1:

$$A_{90}/A_{25} \geq 0.95 \qquad \text{[Expression 1]}$$

wherein the adhesive force is obtained by measuring a peel strength between the porous substrate and the inorganic composite layer using a universal testing machine (UTM) (3343, manufactured by Instron Corporation) according to ASTM D903, and a unit thereof is gf/15 mm.

Hereinafter, the present invention will be described in more detail with reference to Examples and Comparative Examples. However, the following Examples and Comparative Examples are only examples for describing the present invention in more detail, and the present invention is not limited by the following Examples.

[Physical property measurement method]

(1) Thermal contraction rate

A 10 cm x 10 cm composite separator with a transverse direction (TD) marked was left at each of 130°C, 150°C, and 170°C for 1 hour, a reduction rate in area was measured, and then, a thermal contraction rate was calculated by the following Equation 1.

$$\text{Thermal contraction rate in TD (\%) = ((TD length before}$$

$$\text{heating - TD length after heating)/TD length before heating)} \times$$

$$100 \qquad \text{[Equation 1]}$$

(2) Gas permeability

A gas permeability was evaluated by measuring a change in Gurley permeability calculated by the following Equation 2. At this time, the Gurley permeability was calculated by measuring a time in seconds for 100 cc air to pass through an area of 1 square inch of the composite separator according to the standard of ASTM D726 using a densometer manufactured by Toyo Seiki Seisaku-sho, Ltd.ΔGurley permeability (sec) = Gurley permeability of composite separator - Gurley permeability of porous substrate [Equation 2]

(3) Adhesive force

A peel strength between the porous substrate and the inorganic composite layer was measured at each of 25°C and 90°C by a 180° peel test method (ASTM D903) using a universal testing machine (UTM) (3343, manufactured by Instron Corporation).

(4) Electrochemical properties of battery

An impedance of each of batteries manufactured through each assembling process was measured using a charge/discharge cycle device as in the following method.
While maintaining a temperature of a chamber in which the battery was contained at room temperature (25°C), the battery was charged at a constant current-constant voltage (CC-CV) of 4.2 V and then was discharged to 2.5 V to measure a lifespan and a resistance at room temperature. As for the resistance, an average value of DC-IR impedance values of each cycle was measured while charging with 0.5 C and discharging with 0.5 C from 2.5 V to 4.2 V for 20 times, and a resistance standard deviation was calculated from each value. In addition, a resistance increase rate was calculated according to the following Equation 3.

$$\text{Resistance increase rate (\%)} = ((\text{Resistance of composite separator} - \text{Resistance of porous substrate})/\text{Resistance of porous substrate}) \times 100 \qquad [\text{Equation 3}]$$

[Example 1]

**[Manufacturing of composite separator]**

Based on the total weight of boehmite and boehmite nanowires, 93 wt% of boehmite having an average particle diameter of 300 nm and 7 wt% of boehmite nanowires having an average diameter of 4 nm and L/D of 350 were added to water, and a defoamer (BYK-012, manufactured by BYK) was added so that the amount of the defoamer was 200 ppm with respect to the total amount of the slurry composition. Then the composition was stirred for about 30 minutes to prepare a slurry composition having a solid concentration of 30 wt%.

Thereafter, the slurry composition was bar-coated onto both surfaces of a polyethylene film (porosity of 41%) having a thickness of 9 $\mu$m and drying was performed. A coating thickness of each surface was 1.5 $\mu$m. An average pore size and a porosity of the manufactured composite separator were 0.04 $\mu$m and 45%, respectively, and a porosity of the inorganic composite layer (coating layer) was 56%.

The results of measuring the total coating thickness, the thermal shrinkage rate, the $\Delta$Gurley permeability, and the adhesive force of the manufactured composite separator are shown in Table 1.

**[Production of cathode]**

94 wt% of $LiCoO_2$, 2.5 wt% of polyvinylidene fluoride, and 3.5 wt% of carbon black were added to N-methyl-2-prrolidone (NMP) and stirred to prepare a cathode slurry. The slurry was coated onto an aluminum foil having a thickness of 30 $\mu$m, the coated slurry was dried at a temperature of 120°C, and the dried layer was compressed, thereby a cathode plate having a thickness of 150 $\mu$m was produced.

**[Production of anode]**

95 wt% of artificial graphite, 3 wt% of acrylic latex (trade name: BM900B, solid content: 20 wt%) having a $T_g$ of - 52°C, and 2 wt% of carboxymethyl cellulose (CMC) were added to water and stirred to prepare an anode slurry. The slurry was coated onto a copper foil having a thickness of 20 $\mu$m, the coated slurry was dried at a temperature of 120°C, and the dried layer was compressed, thereby an anode plate having a thickness of 150 $\mu$m was produced.

**[Manufacturing of battery]**

A pouch type battery was assembled using the produced cathode, anode, and separator in a stacking manner. An ethylene carbonate/ethylmethyl carbonate/dimethyl carbonate (volume ratio of 3:5:2) electrolyte with 1 M lithium hexafluorophosphate ($LiPF_6$) dissolved was injected into the assembled battery to manufacture a pouch type lithium ion secondary battery having a capacity of 80 mAh.

The resistance and resistance increase rate of the manufactured battery are shown in Table 1.

[Example 2]

Example 2 was performed in the same manner as that of Example 1, except that the content of the boehmite nanowires was changed to 5 wt%, and a slurry composition further containing 2 wt% of polyvinyl alcohol (Mw 200,000 g/mol, PVA, manufactured by Sigma Aldrich) was prepared in the manufacturing of the composite separator in Example 1. The results are shown in Table 1.

[Comparative Example 1]

Comparative Example 1 was performed in the same manner as that of Example 1, except that a slurry composition having a solid concentration of 30 wt% was prepared by adding 93 wt% of boehmite having an average particle diameter of 300 nm and 7 wt% of an anionic acrylic resin (weight average molecular weight of 450,000 g/mol, manufactured by AEKYUNG CHEMICAL Co., Ltd) to water, and performing stirring intensely through magnetron stirring in the manufacturing of the composite separator in Example 1. The results are shown in Table 1.

[Comparative Example 2]

Comparative Example 2 was performed in the same manner as that of Example 1, except that a slurry composition having a solid concentration of 30 wt% was prepared by adding 97 wt% of boehmite having an average particle diameter of 300 nm, 1.5 wt% of an anionic acrylic resin (weight average molecular weight of 450,000 g/mol, manufactured by AEKYUNG CHEMICAL Co., Ltd), and 1.5 wt% of polyvinyl pyrrolidone (Mw of 3,000,000 g/mol, PVP, manufactured by Sigma Aldrich) to water, and performing stirring intensely through magnetron stirring in the manufacturing of the composite separator in Example 1. The results are shown in Table 1.

[Comparative Example 3]

Comparative Example 3 was performed in the same manner as that of Example 1, except that a slurry composition having a solid concentration of 30 wt% was prepared by adding 97 wt% of boehmite having an average particle diameter of 300 nm and 3 wt% of polyacrylamide (Mw of 150,000 g/mol, manufactured by Sigma Aldrich) to water, and performing stirring intensely through magnetron stirring in the manufacturing of the composite separator in Example 1. The results are shown in Table 1.

[Comparative Example 4]

Comparative Example 4 was performed in the same manner as that of Example 1, except that the defoamer was not added to the slurry composition in the manufacturing of the composite separator in Example 1. The results are shown in Table 1.

[Table 1]

Physical properties of separator

| | Thickness | Thermal contraction rate (%) (TD%) | | | ΔGurley permeability | Adhesive force gf/15 mm | | $A_{90}/A_{25}$ | Battery | | |
| | | | | | | | | | Resistance (mΩ) | | Resistance increase rate |
| | μm | 130°C | 150°C | 170°C | sec/100 cc | Room temperature ($A_{25}$) (25°C) | High temperature ($A_{90}$) (90°C) | | Average | Standard deviation | % |
|---|---|---|---|---|---|---|---|---|---|---|---|
| Example 1 | 3 | 0.2 | 1.8 | 1.9 | 32 | 649 | 656 | 1.01 | 1,399 | 9.5 | 1.27 |
| Example 2 | 3 | 0.3 | 2.1 | 2.2 | 34 | 670 | 668 | 1.00 | 1,433 | 10.5 | 3.73 |
| Comparative Example 1 | 3 | 3.7 | 5.1 | 5.2 | 65 | 614 | 523 | 0.85 | 1,541 | 16 | 11.55 |
| Comparative Example 2 | 3 | 3.4 | 5.4 | 5.6 | 38 | 517 | 402 | 0.77 | 1,499 | 23 | 8.51 |
| Comparative Example 3 | 3 | 0.2 | 2.1 | 2.2 | 90 | 708 | 638 | 0.90 | 1,495 | 22 | 8.22 |
| Comparative Example 4 | 3 | 0.3 | 1.8 | 2.0 | 46 | 613 | 544 | 0.88 | 1,562 | 52 | 13.07 |

Referring to Table 1, it could be appreciated that even at a high temperature of 170°C, the thermal contraction rates were less than 3%, and the values of $A_{90}/A_{25}$ were 0.98 or more in Examples 1 and 2.

On the other hand, it was confirmed that the thermal contraction rates were high and the adhesive forces at a high temperature were reduced by 15% or more in Comparative Examples 1 and 2 and the adhesive force at a high temperature was reduced by 10% or more in Coparative Example 4. In addition, all of the resistance increase rates of Comparative Examples 1 to 4 were 8% or more, which was very high compared to the battery of Examples. As set forth above, the composite separator according to an exemplary embodiment of the present invention includes the inorganic composite layer that is formed on the porous substrate and is formed using a slurry composition containing inorganic particles, a one-dimensional inorganic material, and a defoamer, such that the composite separator may have an excellent adhesive force between the porous substrate and the inorganic composite layer even when an organic binder is not contained or a content of the organic binder is significantly low, and may prevent a significant reduction in adhesive force even when a temperature is raised.

Further, the composite separator according to an exemplary embodiment of the present invention has improved heat resistance, such that ignition or rupture of a battery caused by an abnormal phenomenon such as a rapid rise in temperature may be prevented.

Further, the composite separator according to an exemplary embodiment of the present invention uses a one-dimensional inorganic material, such that the composite separator may not use an organic binder or may use an extremely small amount of an organic binder, and the electrochemical device using the same may be chemically stable and may have excellent electrical properties.

Hereinabove, although the composite separator, the method of manufacturing the same, and the electrochemical device including the same have been described in the present invention by specific matters and limited exemplary embodiments, they have been provided only for assisting in the entire understanding of the present invention. Therefore, the present invention is not limited to the exemplary embodiments. Various modifications and changes may be made by those skilled in the art to which the present invention pertains from this description.

Therefore, the present invention is not limited to the described exemplary embodiments.

**Claims**

1. A composite separator comprising:

   (a) a porous substrate; and
   (b) an inorganic composite layer that is formed on one or both surfaces of the porous substrate and is formed using a slurry composition containing inorganic particles, a one-dimensional inorganic material, and a defoamer.

2. The composite separator of claim 1, wherein the inorganic composite layer has pores formed by connecting and fixing inorganic particles and one-dimensional inorganic material to each other.

3. The composite separator of any of claims 1 to 2, wherein

   (a) the slurry composition further contains an organic binder in an amount of 1 to 50 parts by weight with respect to 100 parts by weight of the one-dimensional inorganic material; or
   (b) the slurry composition contains not more than 50 parts by weight of organic binders with respect to 100 parts by weight of the one-dimensional inorganic material, preferably not more than 40 parts, more preferably not more than 20 parts, still more preferably not more than 10 parts, and most preferably the slurry composition does not contain organic binders.

4. The composite separator of any of claima 1 to 3, wherein the one-dimensional inorganic material is an inorganic nanowire, an inorganic nanofiber, or a combination thereof.

5. The composite separator any of of claims 1 to 4, wherein the one-dimensional inorganic material has (a) an average diameter of 1 to 100 nm, preferably 2 to 10 nm; and/or (b) an average length of 0.01 to 100 $\mu$m, preferably 0.1 to 10 $\mu$m; and/or (c) a L/D ratio of at least 100, preferably 100 to 20,000, more preferably 150 to 10,000, more preferably 200 to 5,000, and most preferably 250 to 2,500.

6. The composite separator of any of claims 1 to 5, wherein the one-dimensional inorganic material is formed of or comprises one or a mixture of two or more selected from a metal, carbon, a metal oxide, a metal nitride, a metal carbide, a metal carbonate, a metal hydrate, and a metal carbonitride, preferably the one-dimensional inorganic material is formed of an aluminium oxide hydroxide, more preferably the one-dimensional inorganic material is formed of or comprises one or a mixture of two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$; and/or wherein the inorganic particles are formed of or comprise one or a mixture of two or more selected from a metal oxide, a metal nitride, a metal carbide, a metal carbonate, a metal hydrate, and a metal carbonitride, preferably the inorganic particles comprise aluminium oxide hydroxide, more preferably wherein the inorganic particles are formed of or comprise one or a mixture of two or more selected from boehmite, $Al_2O_3$, $TiO_2$, $CeO_2$, MgO, NiO, $Y_2O_3$, CaO, $SrTiO_3$, $SnO_2$, ZnO, and $ZrO_2$, preferably the inorganic particles comprise boehmite.

7. The composite separator of any of claims 1 to 6, wherein an average size of the inorganic particle is 0.001 to 20 $\mu$m, preferably 0.001 to 10 $\mu$m, more preferably 0.01 to 5 $\mu$m, and most preferably 0.1 to 2 $\mu$m.

8. The composite separator of any of claims 1 to 7, wherein the slurry composition further contains organic particles, preferably in an amount of 0.1 to 40 parts by weight with respect to 100 parts by weight of the inorganic particles.

9. The composite separator of any of claims 1 to 8, wherein the defoamer contains polyoxyalkylene or a unit derived from a polyoxyalkylene compound, preferably wherein a content of the defoamer is 100 to 500 ppm, preferably 100 to 300 ppm, with respect to a total content of the slurry composition.

10. The composite separator of any of claims 1 to 9, wherein the porous substrate comprises or is formed of polyethylene, polypropylene, or copolymers thereof, preferably one or more selected from high-density polyethylene, low-density polyethylene, linear low-density polyethylene, ultra-high molecular weight polyethylene, polypropylene, and copolymers thereof.

11. The composite separator of any of claims 1 to 10, wherein (a) a thickness of the composite separator is 5 to 100 $\mu$m; and/or (b) the composite separator has an average pore size of 0.001 to 10 $\mu$m; and/or (c) the composite separator has a porosity of 5 to 95%.

12. The composite separator of any of claims 1 to 11, wherein an adhesive force at 25°C ($A_{25}$) and an adhesive force at 90°C ($A_{90}$) between the porous substrate and the inorganic composite layer of the composite separator satisfy the following Expression 1:

$$A_{90}/A_{25} \geq 0.95 \qquad\qquad [\text{Expression 1}]$$

wherein the adhesive force is obtained by measuring a peel strength between the porous substrate and the inorganic composite layer using a universal testing machine (UTM) (3343, manufactured by Instron Corporation) according to ASTM D903, and a unit thereof is gf/15 mm.

13. An electrochemical device comprising a cathode, an anode, a separator, and an electrolyte, wherein the separator is the composite separator according to any one of claims 1 to 12.

14. The electrochemical device of claim 13, wherein the electrochemical device is a lithium secondary battery.

15. A method of manufacturing a composite separator, the method comprising:

coating a slurry composition containing inorganic particles, a one-dimensional inorganic material, and a defoamer onto one or both surfaces of a porous substrate; and
drying the coated porous substrate to form an inorganic composite layer.

Europäisches
Patentamt

European
Patent Office

Office européen
des brevets

## EUROPEAN SEARCH REPORT

Application Number

EP 22 19 8605

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 263 235 B2 (SONY CORP [JP]; MURATA MANUFACTURING CO [JP]) 16 April 2019 (2019-04-16) * Example 1-1 * ----- | 1-15 | INV. H01M50/406 H01M50/446 H01M50/449 H01M50/451 H01M10/0525 |

TECHNICAL FIELDS
SEARCHED      (IPC)

H01M

The present search report has been drawn up for all claims

| Place of search | Date of completion of the search | Examiner |
|---|---|---|
| Munich | 24 February 2023 | Bettio, Andrea |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 8605

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2023

| Patent document cited in search report | | Publication date | Patent family member(s) | | Publication date |
|---|---|---|---|---|---|
| US 10263235 | B2 | 16-04-2019 | CN | 104247090 A | 24-12-2014 |
| | | | JP | 6015676 B2 | 26-10-2016 |
| | | | JP | WO2013108511 A1 | 11-05-2015 |
| | | | KR | 20140125352 A | 28-10-2014 |
| | | | US | 2015004464 A1 | 01-01-2015 |
| | | | WO | 2013108511 A1 | 25-07-2013 |

For more details about this annex : see Official Journal of the European Patent Office, No. 12/82